# EUROPÄISCHE PATENTSCHRIFT

(11) **EP 3 557 190 B1**
(45) Veröffentlichungstag und Bekanntmachung des Hinweises auf die Patenterteilung: **05.08.2020**
(21) Anmeldenummer: 19169164.1
(22) Anmeldetag: 15.04.2019
(51) Int. Cl.: G01D 5/244, G01D 5/347, G01D 5/30

(54) **VERFAHREN ZUM BETRIEB EINER OPTISCHEN SENSOREINHEIT EINES FLURFÖRDERZEUGS SOWIE EINE OPTISCHE SENSOREINHEIT**
OPTICAL SENSOR UNIT AND METHOD FOR OPERATING AN OPTICAL SENSOR UNIT OF AN INDUSTRIAL TRUCK
PROCÉDÉ DE FONCTIONNEMENT D'UNE UNITÉ DE CAPTEUR OPTIQUE D'UN CHARIOT DE MANUTENTION AINSI QU'UNITÉ DE CAPTEUR OPTIQUE

(30) Priorität: 16.04.2018 DE 102018108956
(43) Veröffentlichungstag der Anmeldung: 23.10.2019
(73) Patentinhaber: Jungheinrich Aktiengesellschaft, 22047 Hamburg (DE)
(72) Erfinder: Geilsdorf, Hendrik, 22417 Hamburg (DE)
(74) Vertreter: Hauck Patentanwaltspartnerschaft mbB

(56) Entgegenhaltungen:
- DE-A1- 19 712 622
- DE-A1-102015 104 201
- DE-B4- 10 066 149
- US-A1- 2014 021 341

## Beschreibung

Die Erfindung betrifft ein Verfahren zum Betrieb einer optischen Sensoreinheit eines Flurförderzeugs sowie eine solche optische Sensoreinheit. Die optische Sensoreinheit dient der Bestimmung der Ausfahrposition einer Kolbenstange eines Zylinders des Flurförderzeugs.

Flurförderzeuge verfügen üblicherweise über einen oder mehrere Hydraulikzylinder, welche insbesondere zum Ausfahren des Lastteils sowie der unterschiedlichen Maststufen eines Hubmastes dienen. Für den ordnungsgemäßen Betrieb des Flurförderzeugs ist es wünschenswert jederzeit möglichst exakt die aktuelle Hubhöhe zu kennen. Hierfür sind unterschiedliche Sensoren bekannt, beispielsweise Seilzugsensoren, Zahnriemen oder induktive Näherungsschalter. Auch sind Wegmesssysteme am Hydraulikzylinder bekannt.

So beschreiben DE 10 2015 104 201 A1 und DE 10 2016 103 721 A1 jeweils Zylinder mit einer mit Markierungen versehenen Kolbenstange, wobei die Markierungen durch einen optischen Sensor ausgelesen werden. Bei einem Ausfahren oder Einfahren der Kolbenstange überstreicht von der Sensoreinheit ausgesandte optische Strahlung abwechselnd markierte und nicht markierte Bereiche, was sich in einer periodischen Schwankung des durch die reflektierte Strahlung erzeugten Signals niederschlägt. Somit können die überstrichenen Markierungen gezählt und die aktuelle Ausfahrposition bestimmt werden. Es ist hierbei von wesentlicher Bedeutung, dass die Sensoreinheit die Markierungen stets zuverlässig erkennt. Insbesondere aufgrund von Alterserscheinungen der beteiligten Komponenten gestaltet sich dies jedoch schwierig.

Dokument DE 100 66 149 B4 offenbart ein ähnliches Verfahren zur Fehlerbehebung wie Anspruch 1 und Dokumente US 2014/021341 A1 und DE 197 12 622 A1 offenbaren andere, alternative Verfahren.

Der Erfindung liegt die Aufgabe zugrunde, ein Verfahren zum Betrieb einer optischen Sensoreinheit eines Flurförderzeugs sowie eine optische Sensoreinheit zur Verfügung zu stellen, die langfristig eine sichere Feststellung der Ausfahrposition der Kolbenstange gewährleisten können.

Die Erfindung löst diese Aufgabe durch ein Verfahren gemäß Anspruch 1 sowie durch eine optische Sensoreinheit gemäß Anspruch 13. Vorteilhafte Ausgestaltungen sind Gegenstand der Unteransprüche, der Beschreibung sowie der Figuren.

Das erfindungsgemäße Verfahren zum Betrieb einer optischen Sensoreinheit eines Flurförderzeugs, wobei die Sensoreinheit auf einer Kolbenstange eines Zylinders des Flurförderzeugs angeordnete Markierungen detektiert, wobei die Sensoreinheit mindestens ein Sensorelement aufweist mit einem Sender zum Aussenden optischer Strahlung auf die Kolbenstange und einem Empfänger zur Detektion der von der Kolbenstange reflektierten optischen Strahlung, wobei die detektierte Strahlung in dem Empfänger aufgrund der Markierungen ein oszillierendes Spannungssignal erzeugt, welches anschließend in ein binäres Digitalsignal umgewandelt wird, umfasst die Schritte
- Vorgabe einer an dem Empfänger anfallenden Soll-Spannungsamplitude ûₛₒₗₗ als Führungsgröße,
- Einstellen eines an dem Sender anliegenden Stellstroms Iₛₜₑₗₗ als Stellgröße,
- Ermitteln einer mittleren Ist-Spannungsamplitude ûₘᵢₜₜₑₗ über mehrere, durch Überschreiten mehrerer Markierungen erhaltene, Schwingungen der Spannung aus den jeweiligen Ist-Spannungsamplituden ûᵢₛₜ der Spannungssignale,
- Ermitteln einer Regelabweichung Δû = ûₛₒₗₗ - ûₘᵢₜₜₑₗ zwischen der Soll-Spannungsamplitude ûₛₒₗₗ und der mittleren Ist-Spannungsamplitude ûₘᵢₜₜₑₗ,
- Korrektur der mittleren Ist-Spannungsamplitude ûₘᵢₜₜₑₗ durch Änderung des Stellstroms Iₛₜₑₗₗ in Abhängigkeit der Regelabweichung Δû.

Die Bestimmung der Ausfahrposition der Kolbenstange aus dem Zylinder erfolgt mittels der Erkennung der auf der Kolbenstange angebrachten Markierungen durch die optische Sensoreinheit, wie eingangs bereits angesprochen. Die Markierungen können insbesondere äquidistant auf der Kolbenstange angeordnet sein. Es ergibt sich dann ein periodisches Spannungssignal im Empfänger. Die Sensoreinheit kann ein oder mehrere Sensorelemente aufweisen, die jeweils über einen Sender und ein Empfänger verfügen. Eine Bestimmung der Ausfahrposition kann, insbesondere falls nur ein Sensorelement vorgesehen ist, durch Zählen der überschrittenen Markierungen erfolgen. Sind mehrere Sensorelemente vorgesehen, kann insbesondere die Reihenfolge der aufeinanderfolgenden Flanken der digitalen Binärsignale verwertet werden. So kann beispielsweise über eine in einer Auswerteeinheit hinterlegte Logik einer Kombination von durch die Sensorelemente erzeugten Binärsignalen eine Kolbenposition zugeordnet werden. Es erfolgt also eine Ermittlung der aktuellen Kolbenposition anhand einer Wegmessung. Aus der zeitlichen Veränderung der Kolbenposition kann zudem auch auf die Ausfahr- bzw. Einfahrgeschwindigkeit des Kolbens geschlossen werden. Die aufgenommene Spannungsschwingung des Empfängers wird anschließend mittels eines Digitalwandlers in ein digitales Binärsignal umgewandelt, welches zwischen zwei Zuständen schaltet. Das digitale Binärsignal kann insbesondere die Zustände 0 und 1 annehmen, wobei der Zustand 0 einem höheren Spannungssignal entsprechen und damit eine Lücke auf der Kolbenstange indizieren kann und der Zustand 1 einem geringeren Spannungssignal entsprechen und damit eine Markierung auf der Kolbenstange indizieren kann. Natürlich können die Zustände auf umgekehrt definiert sein. Insbesondere können Schaltschwellen definiert sein, um auch bei einem eventuell auftretenden Rauschen des Spannungssignals nicht ungewollt zu schalten. Die Auflösung, also das Maß der Genauigkeit der Bestimmung der Kolbenposition ergibt sich aus dem Abstand der auf der Kolbenstange angebrachten Markierungen sowie - bei mehreren Sensorelementen - aus dem Abstand der Sensorelemente zueinander.

Gerade im langfristigen Betrieb der Sensoreinheit bzw. des Zylinders kommt es zu einer Vielzahl von Alterserscheinungen. So kann es durch Abrieb der Markierungen der Kolbenstange zu einem sich verringernden Markenkontrast zwischen den markierten Bereichen und den nicht markierten Bereichen kommen, was eine Detektion der Markierungen erschwert. Weiterhin führt auch eine Alterung der Sensorelemente zu einer weniger zuverlässigen Detektion. So können die Sender an Lichtstärke verlieren. Schließlich führen auch Toleranzen der an dem System beteiligten Komponenten sowie Temperaturschwankungen und möglicherweise eine leichte Betauung des Sensorelements oder der Kolbenstange durch Abkühlung in feuchter Luft zu einer Beeinträchtigung der Genauigkeit der Messung. Es wurde hierbei erkannt, dass all diese Fehlerquellen zu einer Abweichung des durch den Empfänger registrierten Spannungssignals durch eine Verringerung der Amplitude und eine Verringerung des Mittelwerts führen. Es kann somit auch eine Reduzierung der Genauigkeit einer gegebenenfalls definierten digitalen Schaltschwelle die Folge sein.

Erfindungsgemäß ist vorgesehen, dies durch Veränderung des an dem Sender des Sensorelements anliegenden Stroms Iₛₜₑₗₗ als Stellgröße auszugleichen. So kann durch Erhöhung des Stellstroms Iₛₜₑₗₗ sowohl ein Intensitätsverlust des Senders als auch ein Kontrastverlust der Markierungen der Kolbenstange ausgeglichen werden. Dies kann erfindungsgemäß - insbesondere vollautomatisch - durch das oben beschriebene Regelungsverfahren erreicht werden. Es kann hierbei zunächst ein beliebiger Stellstrom für den Sender vorgegeben werden, beispielsweise kann dieser aus einer vorherigen Durchführung des Verfahrens ermittelt worden sein, wie später noch erläutert wird. Der Stellstrom Iₛₜₑₗₗ führt zur Aussendung von optischer Strahlung einer gewissen Intensität durch den Sender. Die an der Kolbenstange reflektierte Strahlung wird durch den Empfänger aufgenommen und führt dort zur Erzeugung eines periodischen Spannungsverlaufs durch Überschreiten mehrerer Markierungen. Als Führungsgröße wird hierbei die optimale Spannungsamplitude ûₛₒₗₗ vorgegeben. Von dieser vorgegebenen Spannungsamplitude ûₛₒₗₗ wird ein über mehrere Schwingungen der Spannung ermittelter Mittelwert ûₘᵢₜₜₑₗ der Ist-Spannungsamplituden üist abgezogen und so eine Regelabweichung Δû = ûₛₒₗₗ - ûₘᵢₜₜₑₗ bestimmt. Die Regelabweichung Δû dient anschließend als Eingangsgröße für die Stromregelung des Senders. Es erfolgt somit eine Regelung der in dem Empfänger anfallenden Ausgangsspannung durch den an dem Sender anliegenden Eingangsstrom, insbesondere durch eine Regelung der Spannungsamplitude der Ausgangsspannung auf die mittlere Ist-Spannungsamplitude ûₘᵢₜₜₑₗ. Durch Berücksichtigung der mittleren Ist-Spannungsamplitude über mehrere Schwingungen der periodischen Spannung kann eine sanftere Regelung erreicht werden, insbesondere können beispielsweise durch besonders helle oder dunkle Abschnitte bedingte Extremwerte ausgeglichen werden. Zudem können Schaltschwellen definiert werden, wie nachfolgend erläutert. Sollte nun beispielsweise der Sender, der beispielsweise eine LED (Light Emitting Diode) sein kann, seine Charakteristik aufgrund der Alterung oder aufgrund von Temperaturunterschieden verändern, erfolgt erfindungsgemäß ein Ausgleich durch Änderung des den Sender versorgenden Stellstroms. Gleiches gilt bei einer Abnutzung der Markierungen. Somit wird durch Änderung der Stellstroms einer Verringerung des detektierten Signals, also einer Verringerung der am Empfänger anfallenden Spannungsamplitude, entgegengewirkt. Dies gewährleistet stets eine möglichst zuverlässige Erkennung der Markierungen auf der Kolbenstange.

Nach einer Ausgestaltung erfolgt die Korrektur der mittleren Ist-Spannungsamplitude ûₘᵢₜₜₑₗ durch Erhöhung des an dem Sender anliegenden Stellstroms Iₛₜₑₗₗ, wenn die aktuelle Ist-Spannungsamplitude ûᵢₛₜ die positive zulässige Regelabweichung +Δû überschreitet und/oder durch Verringerung des an dem Sender anliegenden Stellstroms Iₛₜₑₗₗ, wenn die aktuelle Ist-Spannungsamplitude ûᵢₛₜ die zulässige negative Regelabweichung -Δû unterschreitet. Der am Sender anliegende Strom Iₛₜₑₗₗ kann folglich bei Überschreiten einer positiven Regelabweichung +Δû um einen konstanten Wert erhöht und bei Unterschreiten einer negativen Regelabweichung -Δû um einen konstanten Wert verringert werden.

Es handelt sich letztlich um einen Bereichsregler. Eine Regelung auf die mittlere Ist-Spannungsamplitude ûₘᵢₜₜₑₗ erfolgt hierbei nur, wenn die aktuelle Ist-Spannungsamplitude ûᵢₛₜ um mehr als den Betrag der Regelabweichung von der Soll-Spannungsamplitude abweicht. Hierdurch wird ein gewisser zulässiger Toleranzbereich definiert, innerhalb dessen zunächst keine Regelung stattfindet.

Nach einer Ausgestaltung erfolgt die Korrektur der mittleren Ist-Spannungsamplitude ûₘᵢₜₜₑₗ durch Umrechnung der ermittelten Regelabweichung Δû in den einzustellenden Stellstrom Iₛₜₑₗₗ des Senders mittels eines P-, PI- oder PID-Reglers. Derartige Regler sind allgemein bekannt.

Nach einer weiteren Ausgestaltung erfolgt die Korrektur der mittleren Ist-Spannungsamplitude ûₘᵢₜₜₑₗ durch Regelung des Stellstroms Iₛₜₑₗₗ derart, dass eine an dem Empfänger erzeugte, mittlere Ist-Spannung uₘᵢₜₜₑₗ in Übereinstimmung mit einer Schaltschwelle gebracht wird, wenn die aktuelle Ist-Spannungsamplitude ûᵢₛₜ in einem Bereich von ±ü um ûₛₒₗₗ liegt, also wenn gilt ûₛₒₗₗ - Δû < ûᵢₛₜ < ûₛₒₗₗ + Δû. Hierbei wird also zusätzlich zu der oben genannten Regelung auch bei einer Abweichung der Spannungsamplitude geregelt, die kleiner ist als der Betrag der Regelabweichung Δû. Es wird dann auf eine zuvor festgelegte Schaltschwelle geregelt. Die Schaltschwelle definiert hierbei einen Grenzbereich, wobei erst bei Verlassen dieses Grenzbereichs eine Umwandlung des periodischen Spannungssignals in das binäre Digitalsignal erfolgt. Es kann beispielsweise eine Regelung der mittleren Ist-Spannung uₘᵢₜₜₑₗ auf eine mittlere Schaltschwelle erfolgen, falls eine obere und eine untere Schaltschwelle definiert sind. Eine Regelung der Schaltschwelle kann beispielsweise mittels eines P-, PI-oder PID-Reglers stattfinden, wie oben bereits für die Spannungsamplitude erläutert. Nach dieser Ausgestaltung erfolgt somit eine Regelung mit drei unterschiedlichen Regelbereichen: Für ûᵢₛₜ < ûₛₒₗₗ - Δû ergibt sich ein erster Regelbereich und für ûᵢₛₜ > ûₛₒₗₗ + Δû ein zweiter Regelbereich, bei welchen eine Regelung mittels der oben erwähnten Schaltregelung oder der P-, PI-oder PID-Regler erfolgt. Für ûₛₒₗₗ - Δû < ûᵢₛₜ < ûₛₒₗₗ + Δû ergibt sich der erwähnte dritte Regelbereich.

Nach einer weiteren Ausgestaltung wird die mittlere Ist-Spannungsamplitude üₘᵢₜₜₑₗ durch Ermitteln der minimalen Werte und der maximalen Werte der Ist-Spannung uᵢₛₜ über mehrere Schwingungen und Bildung eines Mittelwerts errechnet. Nach dieser Ausgestaltung wird das Amplitudenmittel der am Detektor anfallenden Spannung über eine insbesondere arithmetische Mittelwertbildung aus den minimalen und maximalen Werten ermittelt. Dieses Verfahren ist besonders einfach. Grundsätzlich sind jedoch auch andere Verfahren zur Mittelwertbildung denkbar.

Nach einer Ausgestaltung erfolgt die Umwandlung des Spannungssignals in ein binäres Digitalsignal bei Erreichen einer vorgegebenen Schaltschwelle u_{grenz} und Regelung der Schaltschwelle auf einen Mittelwert uₘᵢₜₜₑₗ der an dem Empfänger anfallenden Ist-Spannungen uᵢₛₜ über mehrere Schwingungen der Spannung. Insbesondere kann hierfür der Mittelwert uₘᵢₜₜₑₗ der an dem Empfänger anfallenden Ist-Spannungen uᵢₛₜ über mehrere Schwingungen der Spannung zunächst ermittelt werden. Eine Korrektur der vorgegebenen Schaltschwelle kann durch Auswahl der in Bezug auf uₘᵢₜₜₑₗ nächstgelegenen Schaltschwelle erfolgen. Aufgrund der oben erläuterten Einflüsse und der dadurch folgenden Verringerung der Amplituden sowie der Verschiebung des Mittelwerts der durch den Empfänger detektierten Spannung kann auch ein regelmäßiges Nachstellen einer eventuell definierten Schaltschwelle notwendig sein. Dies kann nach dieser Ausgestaltung über ein entsprechendes Regelverfahren erfolgen. Es wird hierbei zunächst der Mittelwert der Ausgangsspannung über mehrere Schwingungen ermittelt und anhand dieses Mittelwerts die nächstgelegene sinnvolle Schaltschwelle ausgewählt und vorgegeben, die Schaltschwelle also auf den Mittelwert geregelt.

Nach einer Ausgestaltung umfasst das Verfahren eine Einfahrphase zur Kalibrierung des Sensorelements. Dies kann insbesondere beim Neustart eines die Sensoreinheit umfassenden Flurförderzeugs notwendig sein. Insbesondere ist es für die korrekte Funktionsweise der Sensoreinheit zu Beginn des Betriebs hilfreich, den Stellstrom des Senders sowie gegebenenfalls die Schaltschwelle möglichst schnell auf die aktuell vorherrschenden Umgebungsbedingungen einzustellen. Die Einfahrphase kann insbesondere drei Schwingungen der Spannungsamplitude umfassen. Für die Kalibrierung des Sensorelements kann vorgesehen sein, dass der Startwert des Stellstroms des Senders derart groß gewählt wird, dass bei einer Bewegung der Kolbenstange bereits eine für die Kalibrierung ausreichend große Spannungsamplitude im Empfänger erzeugt wird. Dies ist insbesondere bei mehreren Sensorelementen sinnvoll, da nicht alle Sensorelemente zwingend gleichzeitig vor Marken bzw. Lücken positioniert sind. Zu Beginn des Verfahrens ist nicht bekannt, ob sich vor dem jeweiligen Sensorelement eine dunklere Marke oder eine hellere Lücke oder ein Übergang zwischen Marke und Lücke befindet. Im ersten Fall liefert der maximale Stellstrom eine mittlere Ausgangsspannung, im zweiten Fall eine maximale Ausgangsspannung. Es kann daher vorgesehen sein, den oder die Stellströme der Sender gleichmäßig und kontinuierlich zu erhöhen bis mindestens eine Ausgangsspannung am Empfänger ihren maximalen Wert erreicht. Dies wird an dem vor einer Lücke positionierten Sensorelement der Fall sein. Ausgehend von den nun anliegenden Stellströmen kann für jedes Sensorelement eine separate Einstellung des Senderstroms erfolgen, wobei der jeweilige Stellstrom kontinuierlich erhöht wird, solange die entsprechende Ausgangsspannung kleiner als eine untere Grenze (insbesondere 1,0 V) ist und wobei der jeweilige Stellstrom kontinuierlich verringert wird, solange die entsprechende Ausgangsspannung größer als eine obere Grenze (insbesondere 4,0 V) ist. Durch dieses Verfahren wird sichergestellt, dass sich zum Start der Kolbenstangenbewegung alle Sensorelemente in einem Bereich befinden, in dem zumindest ausreichend große und detektierbare Spannungsamplituden generiert werden. Das Verfahren funktioniert am besten mit Sensorelementen, insbesondere LEDs, mit ähnlichen Kennwerten und ist auch ausreichend robust, um eventuelle Toleranzen auszugleichen. Für eine solche Einfahrphase sind insbesondere auch die nachfolgend erläuterten Verfahren denkbar.

Nach einer Ausgestaltung erfolgt die Kalibrierung des Sensorelements mittels Speichern des aktuellen Ist-Stroms Iᵢₛₜ des Senders bei Beendigung des Verfahrens durch Abschalten des Sensorelements und Verwenden des gespeicherten Ist-Stroms Iᵢₛₜ als Startwert für den Stellstrom Iₛₜₑₗₗ beim erneuten Starten des Verfahrens durch Anschalten des Sensorelements. Somit kann anhand eines vorhergehenden Durchlaufs des erfindungsgemäßen Verfahrens kalibriert werden. Auch eine eventuell vorgesehene Schaltschwelle kann so initialisiert werden. Zudem kann die Temperatur gespeichert werden und der Strom entsprechend einer hinterlegten Vorschrift angepasst werden.

Nach einer weiteren Ausgestaltung wird die mittlere Ist-Spannungsamplitude ûₘᵢₜₜₑₗ über eine erste Anzahl Schwingungen der Spannung aus den jeweiligen Ist-Spannungsamplituden ûᵢₛₜ der Spannungssignale ermittelt, wobei eine Kalibrierung des Sensorelements erfolgt durch Ermitteln einer mittleren Ist-Spannungsamplitude ûₘᵢₜₜₑₗ über eine zweite Anzahl Schwingungen der Spannung aus den jeweiligen Ist-Spannungsamplituden ûᵢₛₜ der Spannungssignale, Ermitteln einer Regelabweichung Δû = ûₛₒₗₗ - ûₘᵢₜₜₑₗ zwischen der vorgegebenen Soll-Spannungsamplitude ûₛₒₗₗ und der mittleren Ist-Spannungsamplitude ûₘᵢₜₜₑₗ, Korrektur der vorgegebenen Soll-Spannungsamplitude ûₛₒₗₗ durch Änderung des Stellstroms Iₛₜₑₗₗ in Abhängigkeit der Regelabweichung Δû, wobei die zweite Anzahl Schwingungen geringer ist als die erste Anzahl Schwingungen. Alternativ oder zusätzlich zu der erwähnten Nutzung gespeicherter Werte kann folglich eine Parameteradaption während der Einfahrphase erfolgen. Hierbei erfolgt während der Einfahrphase eine Messung einer geringeren Anzahl von Schwingungen der am Empfänger anfallenden Spannung als bei der erfindungsgemäßen Regelung. Beispielsweise können bei der Kalibrierung zunächst nur die ersten drei Schwingungen berücksichtigt werden während nach erfolgter Kalibrierung immer vier oder mehr Schwingungen für die Mittelwertbildung berücksichtigt werden Dieses Regelungsverfahren ist zur Kalibrierung zunächst ausreichend.

Nach einer weiteren Ausgestaltung sind mindestens zwei, bevorzugt mindestens drei, entlang der Längsachse der Kolbenstange versetzte Sensorelemente mit jeweils einem Sender und einem Empfänger vorgesehen. Die Sensoreinheit kann folglich mehrere, insbesondere drei, Sensorelemente umfassen, die jeweils einen Sender zum Aussenden optischer Strahlung auf die Kolbenstange und einen Empfänger zur Detektion der von der Kolbenstange reflektierten optischen Strahlung aufweisen. Die in dem jeweiligen Empfänger detektierte Strahlung erzeugt dabei aufgrund der Markierungen jeweils ein oszillierendes Spannungssignal, welches anschließend in jeweils ein binäres Digitalsignal umgewandelt wird. Jedes der Sensorelemente erfährt eine Regelung nach dem erfindungsgemäßen Verfahren. Eine Bestimmung der Ausfahrposition der Kolbenstange kann bei äquidistanten Markierungen dabei insbesondere aus der Phasenverschiebung der Sensorelemente erfolgen. Auch kann eine Bestimmung der Ausfahrposition durch Abzählen der aufeinanderfolgenden Flanken der aus den Spannungssignalen erzeugten digitalen Binärsignale oder durch Auswerten der aufeinanderfolgenden Flanken der Binärsignale erfolgen, wie eingangs bereits erwähnt. Durch Verwendung mehrerer Sensorelemente kann zudem eine gute Ortsauflösung sowie eine Redundanz erreicht und die Bewegungsrichtung der Kolbenstange ermittelt werden.

Nach einer weiteren Ausgestaltung wird eine Schaltanforderung für die Umwandlung eines der Spannungssignale eines der Sensorelemente in ein binäres Digitalsignal gespeichert, wenn die übrigen Sensorelemente alle bereits denselben binären Schaltzustand aufweisen, wobei eine Umwandlung des Spannungssignals in das binäre Digitalsignal erfolgt, wenn die übrigen Sensorelemente nicht länger alle denselben binären Schaltzustand aufweisen. Insbesondere kann vorgesehen sein, dass eine Schaltanforderung gespeichert wird, wenn aufgrund des jeweiligen Spannungssignals eines der Empfänger ein Digitalausgang den Wert 1 ausgeben soll, die Digitalausgänge der übrigen Sensorelemente jedoch alle bereits den Wert 1 aufweisen, wobei eine Umwandlung des Spannungssignals in das binäre Digitalsignal 1 erfolgt, wenn die übrigen Sensorelemente nicht länger alle den Schaltzustand 1 aufweisen. Insbesondere für sicherheitskritische Anwendungen ist wichtig, dass jeder mögliche Fehler durch das System - bspw. eine angeschlossene Auswerteeinheit - erkannt werden kann. Insbesondere muss ein Kabelabriss zuverlässig erkannt werden, welcher bei einer Ausführung aller Sensorausgänge als "Open-Collector-Ausgänge" einen HIGH-Pegel als Ausgabe zur Folge hat. Bei drei Sensorelementen entspricht dies dem Schaltzustand [111]. Es sollte daher sichergestellt werden, dass der Zustand [111] im normalen Betrieb nicht auftreten kann. Dies könnte bspw. durch eine Verschmutzung der Kolbenstange der Fall sein. Als Lösung dieses Problems ist gemäß dieser Ausgestaltung vorgesehen, dass - wenn aufgrund des Spannungssignals eines der Empfänger ein Digitalausgang den Wert 1 ausgeben soll - überprüft wird, ob die anderen Digitalausgänge aufgrund der anderen Sensorelemente bereits einen Wert 1 ausgeben. Falls ja, wird nicht geschaltet, also nicht der Wert 1 angenommen, sondern nur eine Schaltanforderung gespeichert. Ein Schalten erfolgt erst, wenn die anderen Digitalausgänge nicht länger alle den Wert 1 aufweisen. Weiterhin kann vorgesehen sein, dass - wenn ein Digitalausgang aufgrund des am jeweiligen Empfänger anfallenden Spannungswerts auf den Wert 0 geschaltet werden soll - zunächst eine solche Schaltung erfolgt. Anschließend kann überprüft werden, ob eine Schaltanforderung für einen anderen Digitalausgang vorliegt. Falls ja, wird dieser auf den Wert 1 gesetzt. Durch dieses Verfahren wird einerseits sichergestellt, dass der Zustand [111] nicht erreicht wird. Andererseits werden keine Schaltflanken ausgelassen, sondern nur zeitlich leicht verschoben, was eine ausreichend genaue Positionserkennung sicherstellt. Für die erläuterten Auswertungen kann eine gemeinsame Auswerteelektronik vorgesehen sein. Auch kann jedes Sensorelement über eigene, sensorinterne Auswerteeinheiten verfügen.

Nach einer weiteren Ausgestaltung wird die durch den vorgegebenen Stellstrom Iₛₜₑₗₗ eingestellte Spannungsamplitude ûₛₒₗₗ im Empfänger auf etwa 1/3 der aufgrund der Leistung des Senders maximal erreichbaren Spannungsamplitude geregelt. Diese Spannungsamplitude hat sich als bevorzugter Kompromiss zwischen einer langen Lebensdauer des Senders, was eine kleine Amplitude fordert, und einer sicheren Signaldetektion, was eine große Amplitude fordert, erwiesen. Wie oben erläutert, ist mit zunehmendem Alter der Systemkomponenten jedoch ein immer höherer Stellstrom zur Aufrechterhaltung der gewünschten Spannungsamplitude nötig. Es erfolgt also ausgehend von dem genannten Startwert eine erfindungsgemäße Regelung.

Die erfindungsgemäße optische Sensoreinheit zur Bestimmung der Ausfahrposition einer Kolbenstange eines Zylinders eines Flurförderzeugs umfasst mindestens ein Sensorelement mit einem Sender zum Aussenden optischer Strahlung auf die Kolbenstange und einem Empfänger zur Detektion der von der Kolbenstange reflektierten optischen Strahlung zwecks Erkennung von auf der Kolbenstange angeordneten Markierungen, wobei die detektierte Strahlung in dem Empfänger aufgrund der Markierungen ein oszillierendes Spannungssignal erzeugt, welches anschließend in ein binäres Digitalsignal umgewandelt wird, wobei die Sensoreinheit eine Auswerteelektronik umfasst, die dazu ausgebildet ist,
- eine an dem Empfänger anfallende Soll-Spannungsamplitude ûₛₒₗₗ als Führungsgröße vorzugeben,
- einen an dem Sender anliegenden Stellstrom Iₛₜₑₗₗ als Stellgröße einzustellen,
- eine mittlere Ist-Spannungsamplitude ûₘᵢₜₜₑₗ über mehrere, durch Überschreiten mehrerer Markierungen erhaltene, Schwingungen der Spannung aus den jeweiligen Ist-Spannungsamplituden ûᵢₛₜ der Spannungssignale zu ermitteln,
- eine Regelabweichung Δû = ûₛₒₗₗ - ûₘᵢₜₜₑₗ zwischen der Soll-Spannungsamplitude ûₛₒₗₗ und der mittleren Ist-Spannungsamplitude ûₘᵢₜₜₑₗ zu ermitteln sowie
- die mittlere Ist-Spannungsamplitude ûₘᵢₜₜₑₗ durch Änderung des Stellstroms Iₛₜₑₗₗ in Abhängigkeit der Regelabweichung Δû zu korrigieren.

Die optische Sensoreinheit ist zur Durchführung des erfindungsgemäßen Verfahrens geeignet. Die oben gemachten Ausführungen zu dem erfindungsgemäßen Verfahren gelten entsprechend auch für die optische Sensoreinheit. Der Sender des Sensorelements kann insbesondere eine LED sein. Es können mehrere, insbesondere drei, Sensorelemente mit jeweils einem Sender und einem Empfänger vorgesehen sein. Die Markierungen können insbesondere äquidistant auf der Kolbenstange angeordnet sein. Es ergibt sich dann ein periodisches Spannungssignal im Empfänger.

Nach einer Ausgestaltung umfasst die optische Sensoreinheit mindestens zwei, insbesondere drei, äquidistante Sensorelemente, die in einem mit einem Zylinder verbundenen Zustand entlang der Längsachse der Kolbenstange versetzt angeordnet sind. Eine Bestimmung der Ausfahrposition der Kolbenstange kann hierbei wie oben erläutert erfolgen.

Nach einer weiteren Ausgestaltung umfasst die optische Sensoreinheit ein Sensorgehäuse mit einem Grundkörper und einem von dem Grundkörper hervorstehenden Sensorabschnitt, wobei der Grundkörper eine erste Platine mit einer Auswerteelektronik und der Sensorabschnitt eine zweite Platine mit dem mindestens einen Sensorelement aufweisen, wobei der hervorstehende Sensorabschnitt zur Verbindung mit dem Zylinder ausgebildet ist. Der Grundkörper kann beispielsweise quaderförmig ausgebildet sein. Insbesondere kann der Grundkörper zur Anbringung an einem Zylindergehäuse des Zylinders ausgebildet sein. Beispielsweise kann der Grundkörper hierzu eine mit einer Ausnehmung des Zylindergehäuses verrastende Rastnase aufweisen. Der Sensorabschnitt kann zylinderförmig sein und zur Aufnahme in eine Aufnahmeöffnung des Zylinders ausgebildet sein. Die zweite Platine kann ein Heizungselement umfassen zum Heizen des oder der Sensorelemente zur Vermeidung von Kondensation.

Ein erfindungsgemäßer Zylinder, insbesondere ein Hydraulikzylinder, für ein Flurförderzeug umfasst ein Zylindergehäuse, einen in dem Zylindergehäuse relativ zu diesem beweglich angeordneten Kolben, eine an den Kolben anschließende Kolbenstange, an der eine Markierung mit äquidistant angeordneten Marken angeordnet ist, sowie eine auf die Markierung gerichtete, erfindungsgemäße optische Sensoreinheit. Ein solcher Zylinder kann in oder an einem Flurförderzeug angeordnet sein und dem Ausfahren und Einfahren des Hubmastes und/oder des Lastteils dienen.

Ein Ausführungsbeispiel der Erfindung wird im Folgenden anhand von Figuren erläutert. Es zeigen
- Figur 1: eine perspektivische Ansicht einer erfindungsgemäßen optischen Sensoreinheit,
- Figur 2: eine schematische Darstellung einer Kolbenstange mit darauf angeordneten Markierungen sowie drei Sensorelementen,
- Figur 3: eine schematische Darstellung äquidistanter Markierungen und dreier Sensorelemente,
- Figur 4a: eine schematische Darstellung von Markierungen in einer ersten Ausgestaltung,
- Figur 4b: eine schematische Darstellung von Markierungen in einer zweiten Ausgestaltung,
- Figur 5: eine schematische Darstellung des elektrischen Aufbaus der optischen Sensoreinheit,
- Figur 6: die binären Schaltsignale der drei Sensorelemente,
- Figur 7: ein Diagramm der idealen Ausgangsspannung des Empfängers,
- Figur 8: ein Diagramm der tatsächlich auftretenden Ausgangsspannung des Detektors,
- Figur 9: die Ausgangsspannung des Detektors bei unterschiedlichen Senderströmen, und
- Figur 10: das erfindungsgemäße Regelungsschema.

Soweit nichts anderes angegeben ist, bezeichnen im Folgenden gleiche Bezugszeichen gleiche Gegenstände.

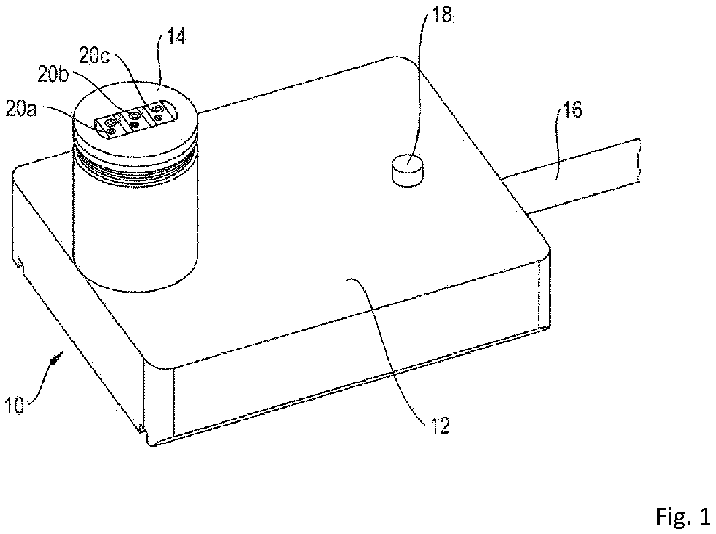

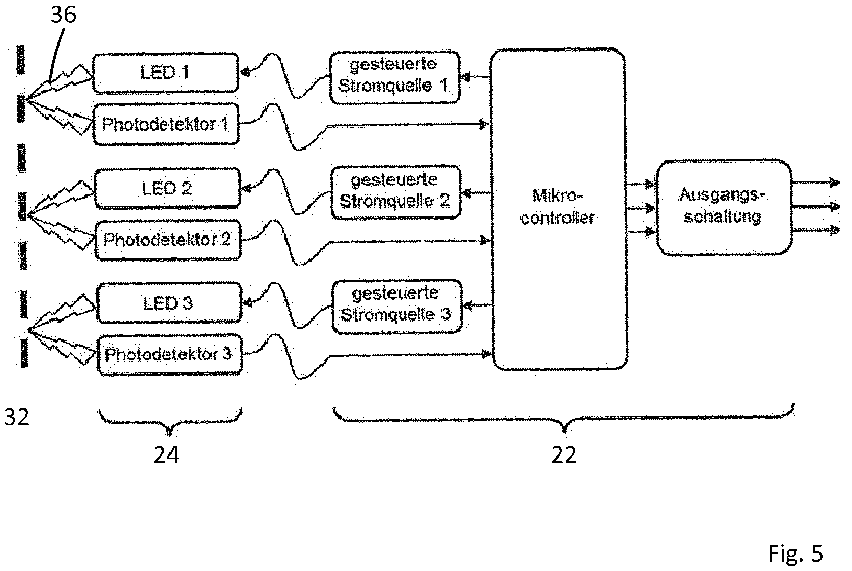

In Figur 1 ist ein beispielhafter Aufbau der erfindungsgemäßen Sensoreinheit dargestellt. Die Sensoreinheit 10 umfasst einen quaderförmigen Grundkörper 12 und einen von dem Grundkörper 12 hervorstehenden Sensorabschnitt 14 sowie ein Anschlusskabel 16 und eine Rastnase 18 zur Anbringung an einem Zylinder eines Flurförderzeugs. Der Sensorabschnitt 14 ist zur Einführung in eine Öffnung eines Zylindergehäuses des Zylinders ausgebildet und verfügt über drei Sensorelemente 20a, 20b und 20c, die jeweils einen Sender und einen Empfänger aufweisen. Die Sender können hierbei insbesondere als LEDs ausgebildet sein. Der Grundkörper 12 verfügt über eine erste Platine 22 und der Sensorabschnitt 14 über eine zweite Platine 24, welche lediglich schematisch in Figur 5 dargestellt sind. Die erste Platine 22 umfasst einen Mikrocontroller mit drei gesteuerten Stromquellen zur Ansteuerung der als LEDs ausgebildeten Sender sowie eine Ausgangsschaltung zur Ausgabe der Signale beispielsweise an eine Fahrzeugsteuerung. Die zweite Platine 24 umfasst die drei Sensorelemente 20a, 20b, 20c, welche neben dem Sender jeweils über einen Fotodetektor verfügen.

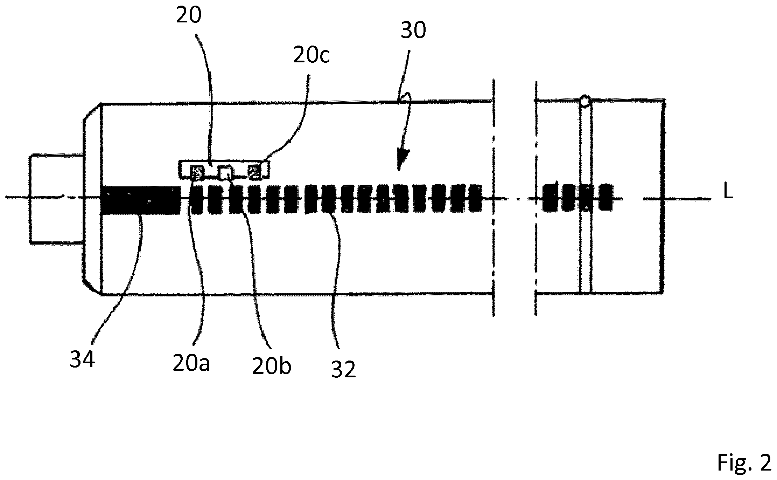

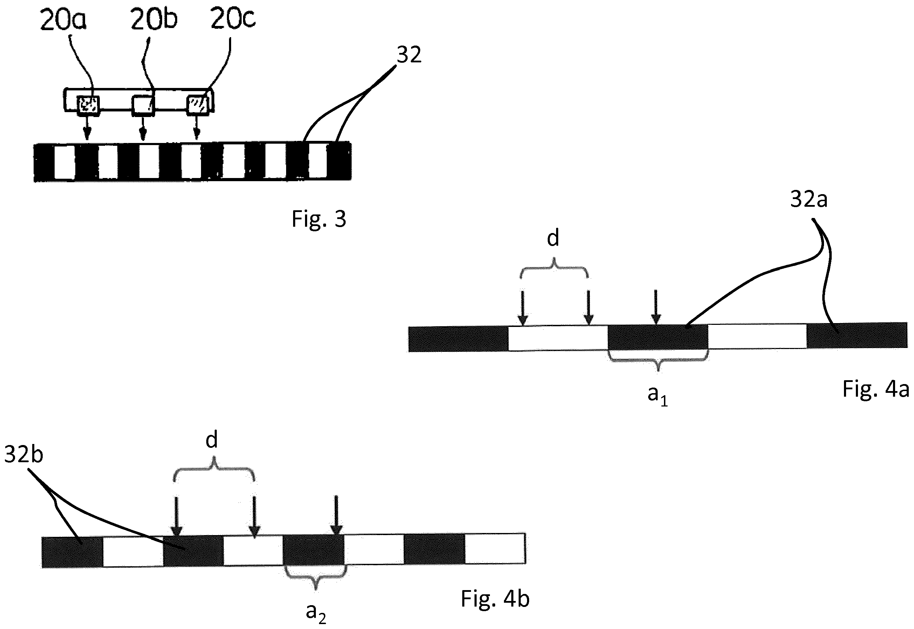

Figur 2 zeigt in einer schematischen Ansicht eine sich entlang einer Längsachse L erstreckende Kolbenstange 30 mit aufgebrachten, äquidistanten Markierungen 32. Zudem ist eine Referenzmarkierung 34 ersichtlich, die eine ausreichende Länge besitzt, um von allen Sensorelementen 20a, 20b, 20c gleichzeitig detektiert werden zu können. Mit der Referenzmarkierung 34 kann somit eine Ausgangsposition der Kolbenstange 30 sicher bestimmt werden. Die Sensoreinheit 10 mit ihren drei Sensorelementen 20a, 20b, 20c ist in Figur 2 abschnittweise schematisch dargestellt. Als Empfänger können die Sensorelemente 20a, 20b, 20c beispielsweise eine auf die Leuchtdiode abgestimmte Fotodiode oder einen Fototransistor aufweisen. Die Sensorelemente 20a, 20b, 20c senden über ihre Sender ein optisches Signal aus, welches von der Kolbenstange 30 reflektiert und in Bereichen der Markierungen 32 aufgrund deren dunkleren Farbe proportional abgeschwächt werden. Beim Einfahren bzw. Ausfahren der Kolbenstange aus ihrem Zylindergehäuse läuft diese entlang der Sensoreinheit 10 wodurch ein periodisches Spannungssignal in jedem der Sensorelemente 20a, 20b, 20c erzeugt wird. Diese Abtastung der Markierung 32 durch die Sensorelemente ist in Figur 3 schematisch dargestellt.

Die Positionsauflösung ist hierbei abhängig von dem Abstand benachbarter Sensorelemente sowie dem Abstand benachbarter Markierungen. In den Figuren 4a und 4b sind schematisch zwei Markierungen 32a, 32b unterschiedlicher Breite und unterschiedlichen Abstands dargestellt. Der Abstand der Sensorelemente 20a zu 20b und 20b zu 20c ist in beiden Fällen der gleiche und ist mit dem Buchstaben d gekennzeichnet. In Figur 4a beträgt die Marken- bzw. Lückenbreite a₁ = 3/2 ^{∗} d und führt somit zu einer Positionsauflösung von 0,5d. In der in Figur 4b dargestellten Ausgestaltung beträgt die Marken- bzw. Lückenbreite a₂ = 3/4 ^{∗} d und führt somit zu einer höheren Positionsauflösung von 0,25d. Zwar ist im zweiten Beispiel die Positionsauflösung höher, was grundsätzlich also einen genaueren Rückschluss auf die Ausfahrposition des Kolbens erlaubt. Dafür fallen allerdings Toleranzen bei den Markierungen stärker ins Gewicht. Zudem werden bei dem Ausführungsbeispiel der Figur 4b - im Gegensatz zu dem Ausführungsbeispiel der Figur 4a - die steigenden bzw. fallenden Flanken des aus dem aufgenommenen Spannungssignal erzeugten Binärsignals nicht nacheinander durch dieselbe Marke bzw. Lücke erzeugt sondern durch unterschiedliche Marken bzw. Lücken. Dies führt zusätzlich dazu, dass eventuelle Toleranzen der Markierungen einen besonders hohen Einfluss auf das Messergebnis haben.

In Figur 5 ist schematisch der elektrische Aufbau der Sensoreinheit dargestellt, wie oben bereits angesprochen. Hierbei ist ersichtlich, dass ein Mikrocontroller über drei separate Stromquellen die LEDs der Sensorelemente 20a, 20b, 20c ansteuert und somit zur Aussendung optischer Strahlung 36 veranlasst. Die optische Strahlung 36 wird an den Markierungen 32 der Kolbenstange 30 reflektiert und durch die Fotodetektoren der optischen Sensorelemente 20a, 20b, 20c aufgefangen. In den Fotodetektoren wird somit aufgrund der Bewegung der Kolbenstange ein periodisches Spannungssignal erzeugt, welches wiederum durch den Mikrocontroller über eine Ausgangsschaltung in ein binäres Ausgangssignal gewandelt wird.

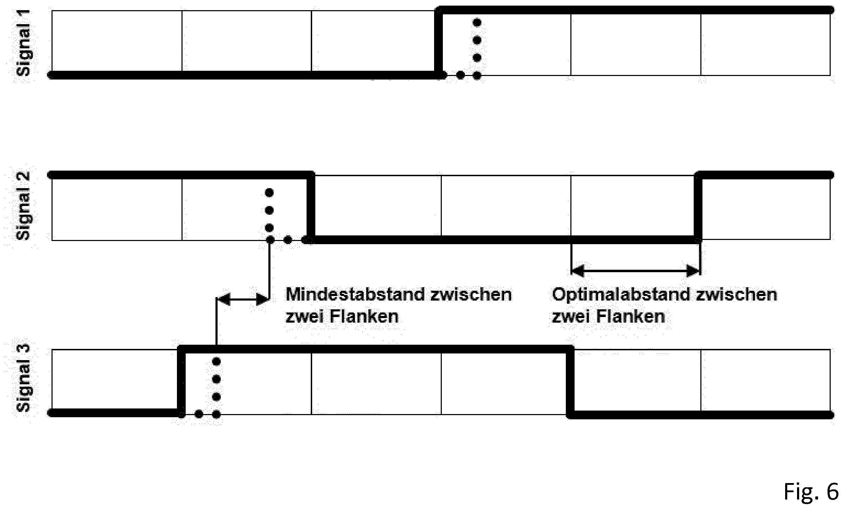

Figur 6 zeigt die binären, digitalen Ausgangssignale 1 - 3 der Sensorelemente 20a, 20b, 20c in einem zeitlichen Verlauf. Das binäre Digitalsignal kann die Zustände 1 und 0 einnehmen, wobei der Zustand 1 eine Markierung und der Zustand 0 eine Lücke definiert, wie eingangs erläutert. Aufgrund der drei Sensorelemente liegen drei solcher Digitalsignale vor. Deutlich zu erkennen sind die zwei Zustände, die die Digitalsignale einnehmen können. Mit jeder registrierten Flanke, also mit jedem Zustandswechsel des Digitalsignals, kann der durch die Kolbenstange zurückgelegte Weg um einen festgelegten Betrag weitergezählt werden. Hierbei ist ein definierter Optimalabstand zwischen zwei aufeinanderfolgenden Flanken der Signale unterschiedlicher Sensorelemente definiert. Dieser ergibt sich aus dem Verhältnis des Abstands d benachbarter Sensorelemente und dem Abstand der Markierungen bzw. Lücken. Für eine sichere Abtastung ist es sinnvoll, auch bei den auftretenden Toleranzen und altersbedingten Änderungen der Markierungen einen Minimalabstand zwischen zwei aufeinanderfolgenden Flanken sicherzustellen. Bezüglich weiterer Details hierzu wird auf DE 10 2015 104 201 A1 verwiesen. Auch kann, wie eingangs erläutert, die inkrementelle Kolbenposition aus der Reihenfolge und Anzahl der aufeinanderfolgenden Flanken ermittelt werden. Beispielsweise kann das durch die drei Sensorelemente erzeugte Gesamtsignal [101] betragen. Das erste Sensorelement und das dritte Sensorelement sind in diesem Fall folglich über einer Markierung positioniert während das zweite Sensorelement über einer Lücke positioniert ist.

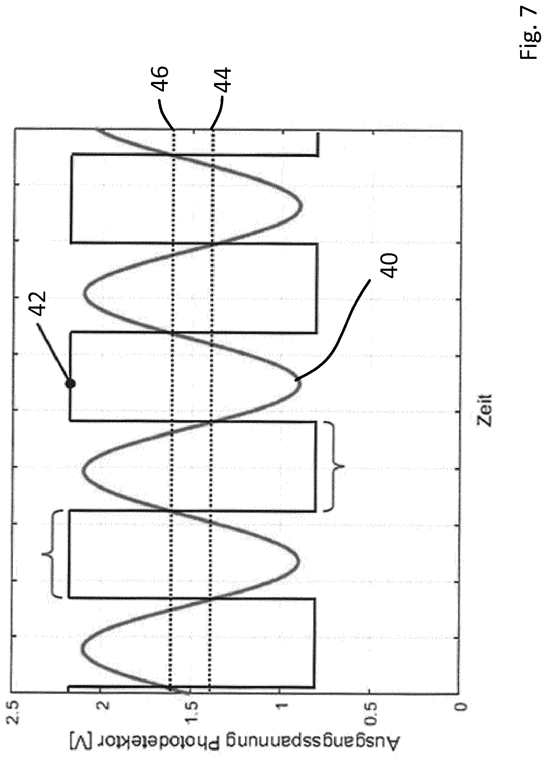

Figur 7 zeigt die Ausgangsspannung uᵢₛₜ unter dem Bezugszeichen 40 an einem der Fotodetektoren, also am Empfänger, in idealisierter Form. Die Ausgangsspannung 40 läuft entlang einer Sinuskurve mit einem Mittelwert bei 1,5 V. Zudem ist das aus dieser Ausgangsspannung 40 erzeugte binäre Digitalsignal 42 dargestellt. Das Digitalsignal wird zwischen seinen beiden Zuständen 0 und 1 geschaltet, wenn die Ausgangsspannung 40 eine untere Schaltschwelle 44 unterschreitet oder eine obere Schaltschwelle 46 überschreitet. Durch Definieren der oberen und unteren Schaltschwelle 44, 46 wird sichergestellt, dass kein unerwünschtes Schalten beispielsweise aufgrund eines Rauschens in der Ausgangsspannung 40 stattfindet. Das hier dargestellte Beispiel zeigt ein gegenläufiges Schalten. Ein Gleichschalten ist jedoch ebenfalls denkbar.

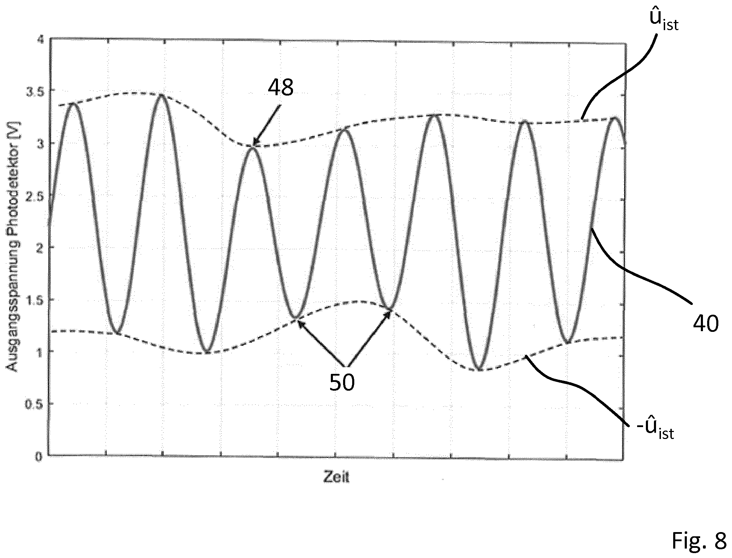

Im realen Betrieb der optischen Sensoreinheit kommt es jedoch meist nicht zu einem ideal sinusförmigen Signal der Ausgangsspannung 40 sondern zu Schwankungen in der Amplitude ûᵢₛₜ, wie in Figur 8 ersichtlich. Derartige Schwankungen der Spannungsamplitude ûᵢₛₜ sind beispielsweise bedingt durch Veränderung der Markierungen an der Kolbenstange, so zum Beispiel durch eine weniger stark reflektierende Lücke 48 oder durch aufgehellte Markierungen 50. Weiterhin führt auch die Alterung der LEDs zu einer Abweichung der durch die Empfänger erzeugten Spannungssignale von der Idealform. Letztlich führen diese Fehlerquellen zu einer Verringerung der Amplitude und einer Verringerung des Mittelwerts der Ausgangsspannung 40 gegenüber dem idealen periodischen Signal.

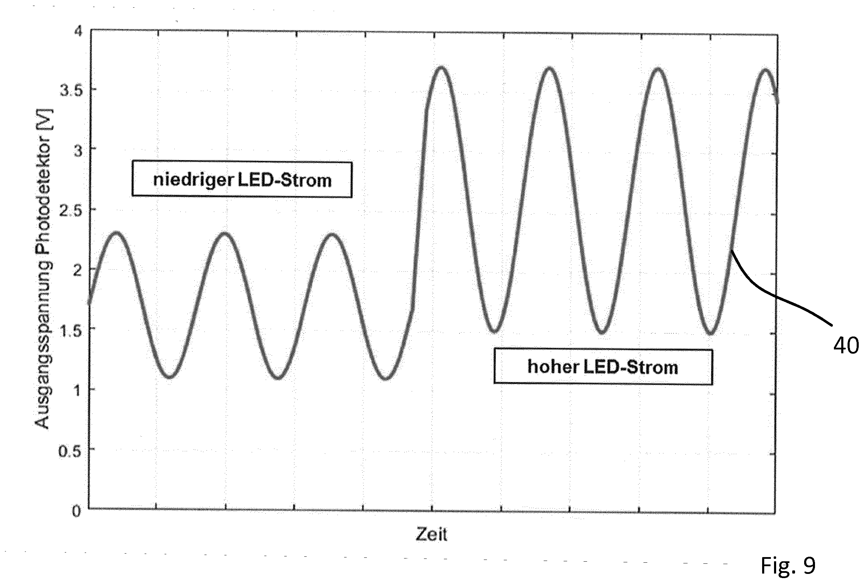

Erfindungsgemäß ist daher vorgesehen, derartige Veränderungen durch eine sensorinterne Regelung zu kompensieren. Hierfür werden die Ströme der die Sensorelemente 20a, 20b, 20c versorgenden Sender derart geregelt, dass die an den Empfängern anfallende Ausgangsspannung 40 langfristig ein möglichst gleichmäßiges Signal ergibt. So kann beispielsweise die Alterung der LEDs durch eine entsprechende Erhöhung des LED-Stroms kompensiert werden. Wie Figur 9 zu entnehmen, hat eine Erhöhung des LED-Stroms eine Erhöhung der Amplitude sowie eine Erhöhung des Mittelwerts der an jedem der Fotodetektoren anfallenden Ausgangsspannung 40 zur Folge. Somit können die durch die genannten Effekte erfolgenden Veränderungen der Ausgangsspannungen 40 durch Regelung des LED-Stroms als Stellgröße ausgeglichen werden.

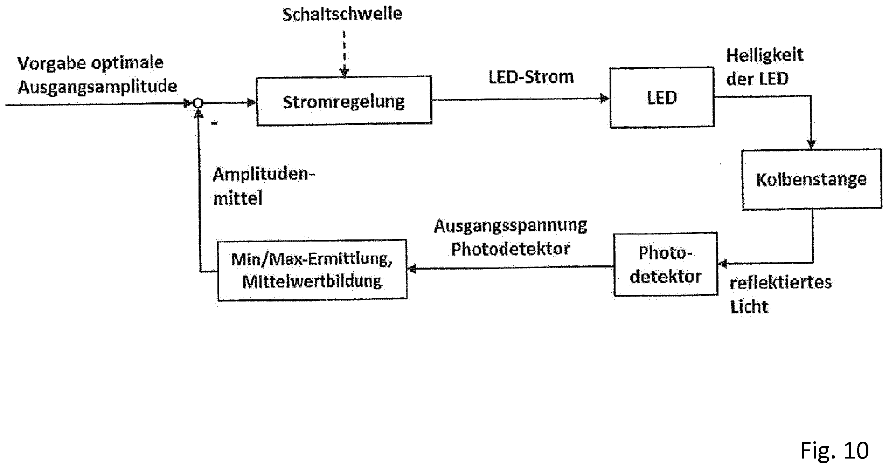

Das erfindungsgemäße Regelungsverfahren ist schematisch in Figur 10 dargestellt. Hierbei ist ersichtlich, dass zunächst eine Soll-Spannungsamplitude ûₛₒₗₗ als Führungsgröße für jeden Empfänger vorgegeben wird. Eingestellt wird diese durch eine entsprechende Wahl eines Stellstroms Iₛₜₑₗₗ für jeden der Sender der Sensorelemente 20a, 20b, 20c. Hierfür verfügt jedes Sensorelement über eine eigene, unabhängig steuerbare Stromquelle, wie in Figur 5 gezeigt. Über den Mikrocontroller erfolgt eine Aufnahme der an den Empfängern anfallenden Ausgangsspannungen uᵢₛₜ aller drei Sensorelemente über mehrere Schwingungen, also über mehrere Markierungen. Anschließend ermittelt der Mikrocontroller aus den somit bekannten Ist-Spannungsamplituden ûᵢₛₜ der jeweiligen Signale jeweils eine mittlere Ist-Spannungsamplitude ûₘᵢₜₜₑₗ sowie anschließend die Regelabweichungen Δû = ûₛₒₗₗ - ûₘᵢₜₜₑₗ zwischen der jeweiligen Soll-Spannungsamplitude ûₛₒₗₗ und der jeweiligen mittleren Ist-Spannungsamplitude ûₘᵢₜₜₑₗ. Über eine anschließend erfolgende Änderung des Stellstroms Iₛₜₑₗₗ wird die mittlere Ist-Spannungsamplitude ûₘᵢₜₜₑₗ korrigiert. Es wird folglich die Amplitude des Spannungssignals auf einen Sollwert geregelt.

Insbesondere für sicherheitskritische Anwendungen ist wichtig, dass jeder mögliche Fehler durch das System - bspw. eine angeschlossene Auswerteeinheit - erkannt werden kann. Insbesondere muss ein Kabelabriss zuverlässig erkannt werden, welcher bei einer Ausführung aller Sensorausgänge als "Open-Collector-Ausgänge" einen HIGH-Pegel als Ausgabe zur Folge hat, also den Zustand [111]. Es sollte daher sichergestellt werden, dass der Zustand [111] im normalen Betrieb nicht auftreten kann. Dies könnte bspw. durch eine Verschmutzung der Kolbenstange der Fall sein. Als Lösung dieses Problems kann vorgesehen sein, dass eine insbesondere sensorinterne Auswerteeinheit überprüft - wenn aufgrund des Spannungssignals eines der Empfänger ein Digitalausgang den Wert 1 ausgeben soll - ob die anderen Digitalausgänge aufgrund der anderen Sensorelemente bereits einen Wert 1 ausgeben. Falls ja, wird nicht geschaltet, also nicht der Wert 1 angenommen, sondern nur eine Schaltanforderung gespeichert. Ein Schalten erfolgt erst, wenn die anderen Digitalausgänge nicht länger alle den Wert 1 aufweisen. Soll ein Digitalausgang aufgrund des am jeweiligen Empfänger anfallenden Spannungswerts auf den Wert 0 geschaltet werden, so erfolgt zunächst eine solche Schaltung. Anschließend wird überprüft, ob eine Schaltanforderung für einen anderen Digitalausgang vorliegt. Falls ja, wird dieser auf den Wert 1 gesetzt. Durch dieses Verfahren wird einerseits sichergestellt, dass der Zustand [111] nicht erreicht wird. Andererseits werden keine Schaltflanken ausgelassen, sondern nur zeitlich leicht verschoben, was eine ausreichend genaue Positionserkennung sicherstellt.

### Bezugszeichenliste

- 10: Sensoreinheit
- 12: Grundkörper
- 14: Sensorabschnitt
- 16: Anschlusskabel
- 18: Rastnase
- 20a, 20b, 20c: Sensorelemente
- 22: erste Platine
- 24: zweite Platine
- 30: Kolbenstange
- 32: Markierungen
- 34: Referenzmarkierung
- 36: optische Strahlung
- 40: Ausgangsspannung
- 42: binäres Digitalsignal
- 44, 46: Schaltschwellen
- 48: Lücke
- 50: Markierung
- a₁, a₂: Abstände benachbarter Markierungen/Lücken
- d: Abstand benachbarter Sensorelemente
- L: Längsachse der Kolbenstange

## Patentansprüche

1. Verfahren zum Betrieb einer optischen Sensoreinheit eines Flurförderzeugs, wobei die Sensoreinheit (20) auf einer Kolbenstange (30) eines Zylinders des Flurförderzeugs angeordnete Markierungen (32) detektiert, wobei die Sensoreinheit (20) mindestens ein Sensorelement (20a, 20b, 20c) aufweist mit einem Sender zum Aussenden optischer Strahlung auf die Kolbenstange (30) und einem Empfänger zur Detektion der von der Kolbenstange (30) reflektierten optischen Strahlung, wobei die detektierte Strahlung in dem Empfänger aufgrund der Markierungen ein oszillierendes Spannungssignal (40) erzeugt, welches anschließend in ein binäres Digitalsignal (42) umgewandelt wird, **gekennzeichnet durch** die Schritte
- Vorgabe einer an dem Empfänger anfallenden Soll-Spannungsamplitude ûₛₒₗₗ als Führungsgröße,
- Einstellen eines an dem Sender anliegenden Stellstroms Iₛₜₑₗₗ als Stellgröße,
- Ermitteln einer mittleren Ist-Spannungsamplitude ûₘᵢₜₜₑₗ über mehrere, durch Überschreiten mehrerer Markierungen erhaltene, Schwingungen der Spannung aus den jeweiligen Ist-Spannungsamplituden ûᵢₛₜ der Spannungssignale,
- Ermitteln einer Regelabweichung Δû = ûₛₒₗₗ - ûₘᵢₜₜₑₗ zwischen der Soll-Spannungsamplitude ûₛₒₗₗ und der mittleren Ist-Spannungsamplitude ûₘᵢₜₜₑₗ,
- Korrektur der mittleren Ist-Spannungsamplitude ûₘᵢₜₜₑₗ durch Änderung des Stellstroms Iₛₜₑₗₗ in Abhängigkeit der Regelabweichung Δû.

2. Verfahren nach Anspruch 1, **gekennzeichnet durch** Korrektur der mittleren Ist-Spannungsamplitude ûₘᵢₜₜₑₗ durch Erhöhung des an dem Sender anliegenden Stellstroms Iₛₜₑₗₗ, wenn die aktuelle Ist-Spannungsamplitude ûᵢₛₜ eine zulässige positive Regelabweichung +Δû überschreitet und/oder durch Verringerung des an dem Sender anliegenden Stellstroms Iₛₜₑₗₗ, wenn die aktuelle Ist-Spannungsamplitude ûᵢₛₜ eine zulässige negative Regelabweichung -Δû unterschreitet.

3. Verfahren nach Anspruch 1, **gekennzeichnet durch** Korrektur der mittleren Ist-Spannungsamplitude ûₘᵢₜₜₑₗ durch Umrechnung der ermittelten Regelabweichung Δû in den einzustellenden Stellstrom Iₛₜₑₗₗ des Senders mittels eines P-, PI- oder PID-Reglers.

4. Verfahren nach Anspruch 2 oder 3, **gekennzeichnet durch** Korrektur der mittleren Ist-Spannungsamplitude ûₘᵢₜₜₑₗ durch Regelung des Stellstroms Iₛₜₑₗₗ derart, dass eine an dem Empfänger erzeugte, mittlere Ist-Spannung uₘᵢₜₜₑₗ in Übereinstimmung mit einer Schaltschwelle gebracht wird, wenn die aktuelle Ist-Spannungsamplitude ûᵢₛₜ in einem Bereich von ±Δû um ûₛₒₗₗ liegt, also wenn gilt ûₛₒₗₗ - Δû < ûᵢₛₜ < ûₛₒₗₗ + Δû.

5. Verfahren nach einem der vorhergehenden Ansprüche, **gekennzeichnet durch** Errechnen der mittleren Ist-Spannungsamplitude ûₘᵢₜₜₑₗ durch Ermitteln der minimalen Werte und der maximalen Werte der Ist-Spannung uᵢₛₜ über mehrere Schwingungen und Bildung eines Mittelwerts.

6. Verfahren nach einem der vorhergehenden Ansprüche, **gekennzeichnet durch** Umwandlung des Spannungssignals (40) in ein binäres Digitalsignal (42) bei Erreichen einer vorgegebenen Schaltschwelle (44, 46) und Regelung der Schaltschwelle (44, 46) auf einen Mittelwert uₘᵢₜₜₑₗ der an dem Empfänger anfallenden Ist-Spannungen uᵢₛₜ über mehrere Schwingungen der Spannung.

7. Verfahren nach einem der vorhergehenden Ansprüche, **gekennzeichnet durch** eine Einfahrphase zur Kalibrierung des Sensorelements (20a, 20b, 20c).

8. Verfahren nach Anspruch 7, **gekennzeichnet durch** Kalibrierung des Sensorelements (20a, 20b, 20c) mittels Speichern des aktuellen Ist-Stroms Iᵢₛₜ des Senders bei Beendigung des Verfahrens durch Abschalten des Sensorelements (20a, 20b, 20c) und Verwenden des gespeicherten Ist-Stroms Iᵢₛₜ als Startwert für den Stellstrom Iₛₜₑₗₗ beim erneuten Starten des Verfahrens durch Anschalten des Sensorelements (20a, 20b, 20c).

9. Verfahren nach Anspruch 7 oder 8, **dadurch gekennzeichnet, dass** die mittlere Ist-Spannungsamplitude ûₘᵢₜₜₑₗ über eine erste Anzahl Schwingungen der Spannung aus den jeweiligen Ist-Spannungsamplituden ûᵢₛₜ der Spannungssignale ermittelt wird, wobei eine Kalibrierung des Sensorelements (20a, 20b, 20c) erfolgt durch Ermitteln einer mittleren Ist-Spannungsamplitude ûₘᵢₜₜₑₗ über eine zweite Anzahl Schwingungen der Spannung aus den jeweiligen Ist-Spannungsamplituden ûᵢₛₜ der Spannungssignale, Ermitteln einer Regelabweichung Δû = ûₛₒₗₗ - ûₘᵢₜₜₑₗ zwischen der vorgegebenen Soll-Spannungsamplitude ûₛₒₗₗ und der mittleren Ist-Spannungsamplitude ûₘᵢₜₜₑₗ, Korrektur der vorgegebenen mittleren Ist-Spannungsamplitude ûₘᵢₜₜₑₗ durch Änderung des Stellstroms Iₛₜₑₗₗ in Abhängigkeit der Regelabweichung Δû, wobei die zweite Anzahl Schwingungen geringer ist als die erste Anzahl Schwingungen.

10. Verfahren nach einem der vorhergehenden Ansprüche, **gekennzeichnet durch** mindestens zwei, insbesondere mindestens drei, entlang der Längsachse (L) der Kolbenstange (30) versetzte Sensorelemente (20a, 20b, 20c).

11. Verfahren nach Anspruch 10, **gekennzeichnet durch** Speichern einer Schaltanforderung für die Umwandlung eines der Spannungssignale (40) eines der Sensorelemente (20a, 20b, 20c) in ein binäres Digitalsignal (42), wenn die übrigen Sensorelemente (20a, 20b, 20c) alle bereits denselben binären Schaltzustand aufweisen, wobei eine Umwandlung des Spannungssignals (40) in das binäre Digitalsignal (42) erfolgt, wenn die übrigen Sensorelemente (20a, 20b, 20c) nicht länger alle denselben binären Schaltzustand aufweisen.

12. Verfahren nach einem der vorhergehenden Ansprüche, **dadurch gekennzeichnet, dass** die durch den vorgegebenen Stellstrom Iₛₜₑₗₗ eingestellte Spannungsamplitude ûₛₒₗₗ im Empfänger auf etwa 1/3 der aufgrund der Leistung des Senders maximal erreichbaren Spannungsamplitude geregelt wird.

13. Optische Sensoreinheit zur Bestimmung der Ausfahrposition einer Kolbenstange eines Zylinders eines Flurförderzeugs, umfassend mindestens ein Sensorelement (20a, 20b, 20c) mit einem Sender zum Aussenden optischer Strahlung auf die Kolbenstange (30) und einem Empfänger zur Detektion der von der Kolbenstange (30) reflektierten optischen Strahlung zwecks Erkennung von auf der Kolbenstange (30) angeordneten Markierungen (32), wobei die detektierte Strahlung in dem Empfänger aufgrund der Markierungen (32) ein oszillierendes Spannungssignal (40) erzeugt, welches anschließend in ein binäres Digitalsignal (42) umgewandelt wird, wobei die Sensoreinheit (10) eine Auswerteelektronik umfasst, die dazu ausgebildet ist,
- eine an dem Empfänger anfallende Soll-Spannungsamplitude ûₛₒₗₗ als Führungsgröße vorzugeben,
- einen an dem Sender anliegenden Stellstrom Iₛₜₑₗₗ als Stellgröße einzustellen,
- eine mittlere Ist-Spannungsamplitude ûₘᵢₜₜₑₗ über mehrere, durch Überschreiten mehrerer Markierungen erhaltene, Schwingungen der Spannung aus den jeweiligen Ist-Spannungsamplituden ûᵢₛₜ der Spannungssignale zu ermitteln,
- eine Regelabweichung Δû = ûₛₒₗₗ - ûₘᵢₜₜₑₗ zwischen der Soll-Spannungsamplitude ûₛₒₗₗ und der mittleren Ist-Spannungsamplitude ûₘᵢₜₜₑₗ zu ermitteln sowie
- die mittlere Ist-Spannungsamplitude ûₘᵢₜₜₑₗ durch Änderung des Stellstroms Iₛₜₑₗₗ in Abhängigkeit der Regelabweichung Δû zu korrigieren.

14. Optische Sensoreinheit nach Anspruch 13, **gekennzeichnet durch** mindestens zwei, insbesondere drei, äquidistante Sensorelemente (20a, 20b, 20c), die in einem mit einem Zylinder verbundenen Zustand entlang der Längsachse (L) der Kolbenstange (30) versetzt angeordnet sind.

15. Optische Sensoreinheit nach Anspruch 13 oder 14, **gekennzeichnet durch** ein Sensorgehäuse mit einem Grundkörper (12) und einem von dem Grundkörper (12) hervorstehenden Sensorabschnitt (14), wobei der Grundkörper (12) eine erste Platine (22) mit einer Auswerteelektronik und der Sensorabschnitt (14) eine zweite Platine (24) mit dem mindestens einen Sensorelement (20a, 20b, 20c) aufweisen, wobei der hervorstehende Sensorabschnitt (14) zur Verbindung mit dem Zylinder ausgebildet ist.

16. Zylinder, insbesondere Hydraulikzylinder, für ein Flurförderzeug umfassend ein Zylindergehäuse, einen in dem Zylindergehäuse relativ zu diesem beweglich angeordneten Kolben, eine an den Kolben anschließende Kolbenstange (30), an der Markierungen (32) angeordnet sind, sowie eine auf die Markierungen (32) gerichtete, optische Sensoreinheit (10) nach einem der Ansprüche 13 bis 15.

## Claims

1. A method for operating an optical sensor unit of an industrial truck, the sensor unit (20) detecting markings (32) arranged on a piston rod (30) of a cylinder of the industrial truck, the sensor unit (20) comprising at least one sensor element (20a, 20b, 20c) having a transmitter for emitting optical radiation onto the piston rod (30) and a receiver for detecting the optical radiation reflected by the piston rod (30), the detected radiation generating an oscillating voltage signal (40) in the receiver on account of the markings, which voltage signal is then converted into a binary digital signal (42), **characterized by** the steps of
- specifying a target voltage amplitude ûₛₒₗₗ occurring at the receiver as the reference variable,
- setting a control current Iₛₜₑₗₗ applied to the transmitter as the controlled variable,
- determining an average actual voltage amplitude ûₘᵢₜₜₑₗ over several voltage fluctuations produced by traversal of several markings from the respective actual voltage amplitudes ûᵢₛₜ of the voltage signals,
- determining a control deviation Δû = ûₛₒₗₗ - ûₘᵢₜₜₑₗ between the target voltage amplitude ûₛₒₗₗ and the average actual voltage amplitude ûₘᵢₜₜₑₗ,
- correcting the average actual voltage amplitude ûₘᵢₜₜₑₗ by changing the control current Iₛₜₑₗₗ in dependence of the control deviation Δû.

2. The method according to claim 1, **characterized by** correcting the average actual voltage amplitude ûₘᵢₜₜₑₗ by increasing the control current Iₛₜₑₗₗ applied to the transmitter if the current actual voltage amplitude ûᵢₛₜ exceeds a permissible positive control deviation +Δû and/or by reducing the control current Iₛₜₑₗₗ applied to the transmitter if the current actual voltage amplitude ûᵢₛₜ falls below a permissible negative control deviation -Δû.

3. The method according to claim 1, **characterized by** correcting the average actual voltage amplitude ûₘᵢₜₜₑₗ by converting the determined control deviation Δû into the control current Iₛₜₑₗₗ of the transmitter to be set by means of a P, PI or PID controller.

4. The method according to claim 2 or 3, **characterized by** correcting the average actual voltage amplitude ûₘᵢₜₜₑₗ by regulating the control current Iₛₜₑₗₗ such that an average actual current ûₘᵢₜₜₑₗ generated at the receiver is brought into line with a switching threshold if the current actual voltage amplitude ûᵢₛₜ is within a range of ±û around ûₛₒₗₗ, i.e. if ûₛₒₗₗ - Δû < ûᵢₛₜ < ûₛₒₗₗ + Δû.

5. The method according to any one of the preceding claims, **characterized by** calculating the average actual voltage amplitude ûₘᵢₜₜₑₗ by determining the minimum values and maximum values of the actual voltage uᵢₛₜ over several fluctuations and generating an average value.

6. The method according to any one of the preceding claims, **characterized by** converting the voltage signal (40) into a binary digital signal (42) once a predetermined switching threshold (44, 46) has been reached and regulating the switching threshold (44, 46) to an average value ûₘᵢₜₜₑₗ of the actual voltages uᵢₛₜ occurring at the receiver over several voltage fluctuations.

7. The method according to any one of the preceding claims, **characterized by** a run-in phase for calibrating the sensor element (20a, 20b, 20c).

8. The method according to claim 7, **characterized by** calibrating the sensor element (20a, 20b, 20c) by recording the present actual current Iᵢₛₜ of the transmitter when ending the method by switching off the sensor element (20a, 20b, 20c) and using the recorded actual current Iᵢₛₜ as the starting value for the control current Iₛₜₑₗₗ when restarting the method by switching on the sensor element (20a, 20b, 20c).

9. The method according to claim 7 or 8, **characterized in that** the average current voltage amplitude ûₘᵢₜₜₑₗ is determined over a first number of voltage fluctuations from the respective actual voltage amplitudes ûᵢₛₜ of the voltage signals, the sensor element (20a, 20b, 20c) being calibrated by determining an average actual voltage amplitude ûₘᵢₜₜₑₗ over a second number of voltage fluctuations from the respective actual voltage amplitudes ûᵢₛₜ of the voltage signals, determining a control deviation Δû = ûₛₒₗₗ - ûₘᵢₜₜₑₗ between the prespecified target voltage amplitude ûₛₒₗₗ and the average actual voltage amplitude ûₘᵢₜₜₑₗ, correcting the prespecified average actual voltage amplitude ûₘᵢₜₜₑₗ by changing the control current Iₛₜₑₗₗ in dependence of the control deviation Δû, the second number of fluctuations being smaller than the first number of fluctuations.

10. The method according to any one of the preceding claims, **characterized by** at least two, in particular at least three, sensor elements (20a, 20b, 20c) spaced apart along the longitudinal axis (L) of the piston rod (30).

11. The method according to claim 10, **characterized by** storing a switching request for converting one of the voltage signals (40) of one of the sensor elements (20a, 20b) into a binary digital signal (42) if all remaining sensor elements (20a, 20b, 20c) already have the same binary switching state, the voltage signal (40) being converted into the binary digital signal (42) if the remaining sensor elements (20a, 20b, 20c) no longer all have the same binary switching state.

12. The method according to any one of the preceding claims, **characterized in that** the voltage amplitude ûₛₒₗₗ set by means of the predefined control current Iₛₜₑₗₗ is regulated in the receiver to approximately 1/3 of the maximum voltage amplitude that can be achieved based on the output of the transmitter.

13. An optical sensor unit for determining the extended position of a piston rod of a cylinder of an industrial truck, comprising at least one sensor element (20a, 20b, 20c) with a transmitter for emitting optical radiation onto the piston rod (30) and a receiver for detecting the optical radiation reflected by the piston rod (30) for the purpose of detecting markings (32) arranged on the piston rod (30), the detected radiation generating an oscillating voltage signal (40) in the receiver on account of the markings (32), which voltage signal is then converted into a binary digital signal (42), the sensor unit (10) comprising an electronic evaluation system that is configured to
- specify a target voltage amplitude ûₛₒₗₗ occurring at the receiver as the reference variable,
- set a control current Iₛₜₑₗₗ applied to the transmitter as the controlled variable,
- determine an average actual voltage amplitude ûₘᵢₜₜₑₗ over several voltage fluctuations produced by traversal of several markings from the respective actual voltage amplitudes ûᵢₛₜ of the voltage signals,
- determine a control deviation Δû = ûₛₒₗₗ - ûₘᵢₜₜₑₗ between the target voltage amplitude ûₛₒₗₗ and the average actual voltage amplitude ûₘᵢₜₜₑₗ and
- correct the average actual voltage amplitude ûₘᵢₜₜₑₗ by changing the control current Iₛₜₑₗₗ in dependence of the control deviation Δû.

14. The optical sensor unit according to claim 13, **characterized by** at least two, in particular three, equidistant sensor elements (20a, 20b, 20c), which are arranged so as to be connected to a cylinder and spaced apart along the longitudinal axis (L) of the piston rod (30).

15. The optical sensor unit according to claim 13 or 14, **characterized by** a sensor housing having a main body (12) and a sensor portion (14) projecting from the main body (12), the main body (12) having a first circuit board (22) with an electronic evaluation system and the sensor portion (14) having a second circuit board (24) with the at least one sensor element (20a, 20b, 20c), the projecting sensor portion (14) being designed for connection to the cylinder.

16. A cylinder, in particular a hydraulic cylinder, for an industrial truck comprising a cylinder housing, a piston that is arranged in the cylinder housing so as to move relative thereto, a piston rod (30) which adjoins the piston and on which markings (32) are arranged, and an optical sensor unit (10) according to any one of claims 13 to 15 directed toward the markings (32).

## Revendications

1. Procédé de fonctionnement d'une unité de capteur optique d'un chariot de manutention, dans lequel l'unité de capteur (20) détecte des repères (32) disposés sur une tige de piston (30) d'un vérin du chariot de manutention, dans lequel l'unité de capteur (20) présente au moins un élément capteur (20a, 20b, 20c) avec un émetteur pour diffuser un rayonnement optique sur la tige de piston (30) et avec un récepteur pour détecter le rayonnement optique réfléchi par la tige de piston (30), dans lequel le rayonnement détecté génère un signal de tension (40) oscillant dans le récepteur en raison des repères, lequel est ensuite converti en un signal numérique binaire (42), **caractérisé par** les étapes suivantes
- la prédéfinition d'une amplitude de tension de consigne ûₛₒₗₗ produite au niveau du récepteur comme grandeur de référence,
- l'ajustage d'un courant de réglage Iₛₜₑₗₗ appliqué au niveau de l'émetteur comme variable réglante,
- la détermination d'une amplitude de tension réelle moyenne ûₘᵢₜₜₑₗ au moyen de plusieurs oscillations de la tension obtenues par le franchissement de plusieurs repères à partir des amplitudes de tension réelles ûᵢₛₜ respectives des signaux de tension,
- la détermination d'un écart de régulation Δû = ûₛₒₗₗ - ûₘᵢₜₜₑₗ entre l'amplitude de tension de consigne ûₛₒₗₗ et l'amplitude de tension réelle moyenne ûₘᵢₜₜₑₗ,
- la correction de l'amplitude de tension réelle moyenne ûₘᵢₜₜₑₗ par la variation du courant de réglage Iₛₜₑₗₗ en fonction de l'écart de régulation Δû.

2. Procédé selon la revendication 1, **caractérisé par** la correction de l'amplitude de tension réelle moyenne ûₘᵢₜₜₑₗ moyennant l'augmentation du courant de réglage Iₛₜₑₗₗ appliqué au niveau de l'émetteur lorsque l'amplitude de tension réelle ûᵢₛₜ actuelle dépasse un écart de régulation positif +Δû admissible et/ou moyennant la diminution du courant de réglage Iₛₜₑₗₗ appliqué au niveau de l'émetteur lorsque l'amplitude de tension réelle ûᵢₛₜ actuelle est inférieure à un écart de régulation négatif -Δû admissible.

3. Procédé selon la revendication 1, **caractérisé par** la correction de l'amplitude de tension réelle moyenne ûₘᵢₜₜₑₗ moyennant la conversion de l'écart de régulation Δû déterminé en le courant de réglage Iₛₜₑₗₗ à ajuster de l'émetteur à l'aide d'un régulateur P, PI ou PID (*proportionnel, intégral, dérivé*)*.*

4. Procédé selon la revendication 2 ou 3, **caractérisé par** la correction de l'amplitude de tension réelle moyenne ûₘᵢₜₜₑₗ moyennant la régulation du courant de réglage Iₛₜₑₗₗ, de telle façon qu'une tension réelle moyenne uₘᵢₜₜₑₗ générée au niveau du récepteur est mise en concordance avec un seuil de commutation lorsque l'amplitude de tension réelle ûᵢₛₜ actuelle se situe dans une plage de ± Δû autour de ûₛₒₗₗ, donc lorsque la formule ûₛₒₗₗ - Δû < ûᵢₛₜ < ûₛₒₗₗ + Δû s'applique.

5. Procédé selon l'une des revendications précédentes, **caractérisé par** le calcul de l'amplitude de tension réelle moyenne ûₘᵢₜₜₑₗ moyennant la détermination des valeurs minimales et des valeurs maximales de la tension réelle uᵢₛₜ par le biais de plusieurs oscillations et de la formation d'une valeur moyenne.

6. Procédé selon l'une des revendications précédentes, **caractérisé par** la conversion du signal de tension (40) en un signal numérique binaire (42) une fois atteint un seuil de commutation (44, 46) prédéfini et par la régulation du seuil de commutation (44, 46) sur une valeur moyenne ûₘᵢₜₜₑₗ des tensions réelles uᵢₛₜ produites au niveau du récepteur par le biais de plusieurs oscillations de la tension.

7. Procédé selon l'une des revendications précédentes, **caractérisé par** une phase de rodage servant à calibrer l'élément capteur (20a, 20b, 20c).

8. Procédé selon la revendication 7, **caractérisé par** le calibrage de l'élément capteur (20a, 20b, 20c) à l'aide de l'enregistrement du courant réel Iᵢₛₜ actuel de l'émetteur une fois achevé le procédé moyennant la désactivation de l'élément capteur (20a, 20b, 20c) et par l'utilisation du courant réel Iᵢₛₜ enregistré comme valeur initiale du courant de réglage Iₛₜₑₗₗ lors du redémarrage du procédé moyennant l'activation de l'élément capteur (20a, 20b, 20c).

9. Procédé selon la revendication 7 ou 8, **caractérisé en ce que** l'amplitude de tension réelle moyenne ûₘᵢₜₜₑₗ est déterminée au moyen d'un premier nombre d'oscillations de la tension à partir des amplitudes de tension réelles ûᵢₛₜ respectives des signaux de tension, dans lequel un calibrage de l'élément capteur (20a, 20b, 20c) est réalisé moyennant la détermination d'une amplitude de tension réelle moyenne ûₘᵢₜₜₑₗ au moyen d'un second nombre d'oscillations de la tension à partir des amplitudes de tension réelles ûᵢₛₜ respectives des signaux de tension, moyennant la détermination d'un écart de régulation Δû = ûₛₒₗₗ - ûₘᵢₜₜₑₗ entre l'amplitude de tension de consigne ûₛₒₗₗ prédéfinie et l'amplitude de tension réelle moyenne ûₘᵢₜₜₑₗ, moyennant la correction de l'amplitude de tension réelle moyenne ûₘᵢₜₜₑₗ prédéfinie par la variation du courant de réglage Iₛₜₑₗₗ en fonction de l'écart de régulation Δû, dans lequel le second nombre d'oscillations est plus faible que le premier nombre d'oscillations.

10. Procédé selon l'une des revendications précédentes, **caractérisé par** au moins deux, notamment au moins trois éléments capteurs (20a, 20b, 20c) décalés le long de l'axe longitudinal (L) de la tige de piston (30).

11. Procédé selon la revendication 10, **caractérisé par** l'enregistrement d'une demande de commutation pour la conversion de l'un des signaux de tension (40) de l'un des éléments capteurs (20a, 20b, 20c) en un signal numérique binaire (42) lorsque les autres éléments capteurs (20a, 20b, 20c) présentent tous déjà le même état de commutation binaire, dans lequel une conversion du signal de tension (40) en ledit signal numérique binaire (42) est réalisée lorsque les autres éléments capteurs (20a, 20b, 20c) ne présentent plus tous le même état de commutation binaire.

12. Procédé selon l'une des revendications précédentes, **caractérisé en ce que** l'amplitude de tension ûₛₒₗₗ ajustée par le courant de réglage Iₛₜₑₗₗ prédéfini dans le récepteur se régule sur environ 1/3 de l'amplitude de tension atteignable au maximum de par la puissance de l'émetteur.

13. Unité de capteur optique servant à déterminer la position déployée d'une tige de piston d'un vérin d'un chariot de manutention, comprenant au moins un élément capteur (20a, 20b, 20c) avec un émetteur pour diffuser un rayonnement optique sur la tige de piston (30) et avec un récepteur pour détecter le rayonnement optique réfléchi par la tige de piston (30) afin de détecter les repères (32) disposés sur la tige de piston (30), dans laquelle le rayonnement détecté génère un signal de tension (40) oscillant dans le récepteur en raison des repères, lequel est ensuite converti en un signal numérique binaire (42), dans laquelle l'unité de capteur (10) comprend un système électronique d'analyse, qui est conçu de manière à
- prédéfinir une amplitude de tension de consigne ûₛₒₗₗ produite au niveau du récepteur comme grandeur de référence,
- ajuster un courant de réglage Iₛₜₑₗₗ appliqué au niveau de l'émetteur comme variable réglante,
- déterminer une amplitude de tension réelle moyenne ûₘᵢₜₜₑₗ au moyen de plusieurs oscillations de la tension obtenues par le franchissement de plusieurs repères à partir des amplitudes de tension réelles ûᵢₛₜ respectives des signaux de tension,
- déterminer un écart de régulation Δû = ûₛₒₗₗ - ûₘᵢₜₜₑₗ entre l'amplitude de tension de consigne ûₛₒₗₗ et l'amplitude de tension réelle moyenne ûₘᵢₜₜₑₗ ainsi qu'à
- corriger l'amplitude de tension réelle moyenne ûₘᵢₜₜₑₗ par la variation du courant de réglage Iₛₜₑₗₗ en fonction de écart de régulation Δû.

14. Unité de capteur optique selon la revendication 13, **caractérisée par** au moins deux, notamment au moins trois éléments capteurs équidistants (20a, 20b, 20c), qui sont disposés de façon à être décalés le long de l'axe longitudinal (L) de la tige de piston (30) dans un état relié à un vérin.

15. Unité de capteur optique selon la revendication 13 ou 14, **caractérisée par** un boîtier de capteur avec un corps de base (12) et avec une partie capteur (14) dépassant du corps de base (12), dans laquelle le corps de base (12) présente une première carte de circuits imprimés (22) dotée d'un système électronique d'analyse et la partie capteur (14) comporte une seconde carte de circuits imprimés (24) dotée dudit élément capteur (20a, 20b, 20c) au moins, dans laquelle la partie capteur (14) en saillie est conçue de manière à être reliée au vérin.

16. Vérin, notamment vérin hydraulique, destiné à un chariot de manutention comprenant un corps de vérin, un piston disposé dans le corps de vérin de façon à pouvoir se déplacer par rapport à celui-ci, une tige de piston (30) se raccordant au piston, sur laquelle des repères (32) sont disposés, ainsi qu'une unité de capteur optique (10) selon l'une des revendications 13 à 15, dirigée vers les repères (32).
